# EUROPÄISCHE PATENTSCHRIFT

(11) **EP 3 114 441 B1**
(45) Veröffentlichungstag und Bekanntmachung des Hinweises auf die Patenterteilung: **15.04.2020**
(21) Anmeldenummer: 15711423.2
(22) Anmeldetag: 26.02.2015
(51) Int. Cl.: G01G 21/28, G01D 11/24

(54) **GEHÄUSE FÜR EIN LABORGERÄT**
HOUSING FOR A LABORATORY DEVICE
BOÎTIER DESTINÉ À UN APPAREIL DE LABORATOIRE

(30) Priorität: 04.03.2014 DE 202014001872 U
(43) Veröffentlichungstag der Anmeldung: 11.01.2017
(73) Patentinhaber: BRAND GMBH + CO KG, 97877 Wertheim (DE)
(72) Erfinder: ETTIG, Wolfgang, 97900 Külsheim (DE); GEHRIG, Steffen, 74731 Walldürn (DE)
(74) Vertreter: Von Rohr Patentanwälte Partnerschaft mbB
(86) Internationale Anmeldenummer: PCT/EP2015/000438
(87) Internationale Veröffentlichungsnummer: WO 2015/131985

(56) Entgegenhaltungen:
- US-A1- 2010 276 213

## Beschreibung

Die Erfindung betrifft ein Gehäuse für ein Laborgerät mit den Merkmalen des Oberbegriffs von Anspruch 1.

Das bekannte Gehäuse für ein Laborgerät, von dem die Erfindung ausgeht (EP 2 217 894 B1), ist ein Gehäuse für eine Analysewaage. Laborgeräte der hier in Rede stehenden Art sind bevorzugt Waagen für geringste Gewichte, können aber auch andere Geräte sein, beispielsweise motorisch arbeitende Dosiereinrichtungen etc. Vorliegend geht es um das Gehäuse, in dessen Arbeitsraum sich ein solches Laborgerät befindet. Ein solches Gehäuse dient dem Schutz des Laborgerätes.

Kleinste auf das Laborgerät einwirkende äußere Einflüsse können Messergebnisse, bei einer Analysewaage das Wägeresultat, verfälschen. Zum Schutz des Laborgerätes wird der Arbeitsraum, in dem sich das Laborgerät befindet, umschlossen, so dass Luftbewegungen in der Umgebungsatmosphäre möglichst vom Laborgerät ferngehalten werden. Auch bei Laborgeräten, die Proben transportieren, können Verschmutzungen über Luftbewegungen in Form von Kontaminationen auftreten. Bei solchen Laborgeräten befinden sich motorisch bewegte Komponenten im Arbeitsraum und das Gehäuse dient dabei als Schutz des Anwenders
Im Stand der Technik, von dem die Erfindung ausgeht, wird erläutert, dass zunehmend multifunktionale Arbeitsabläufe im Arbeitsraum eines solchen Gehäuses stattfinden. Dosiereinheiten, Haltevorrichtungen für Aufnahmegefäße wie Mikrotiterplatten etc., Anzeigeeinrichtungen etc. werden im Arbeitsraum gehandhabt. Deshalb muss der Arbeitsraum bei geöffnetem Gehäuse gut zugänglich sein.

Bei dem bekannten Gehäuse, von dem die Erfindung ausgeht, ist zum einen die Frontwand zwischen einer abgesenkten Schließposition und einer angehobenen Öffnungsposition aufwärts und abwärts linear und gleichzeitig schwenkend bewegbar und gibt den Arbeitsraum in der Öffnungsposition von der Frontseite her frei, sind andererseits die rechts und links der Frontwand befindlichen Seitenwände über einen Teilbereich jeweils zwischen einer vorderen Schließposition und einer nach hinten versetzten Öffnungsposition verschiebbar. Die Öffnungs- und Schließbewegung erfolgt überwiegend manuell durch den Anwender. Die bewegten Massen und ihre Endpositionen sind nicht anwendergerecht.

Bei dem bekannten Gehäuse, von dem die Erfindung ausgeht, ist die komplette Frontwand als eine plattenförmige, starre Einheit ausgebildet. Sie ist am oberen Rand der Decke des Gehäuses rechts und links in seitlichen Linearführungen verschiebbar geführt. Diese Linearführungen selbst sind dort schwenkbar angelenkt, so dass eine horizontale Schwenkachse für die schwenkbaren Linearführungen definiert ist.

Am oberen Rand der Frontwand ist um eine zur ersten Schwenkachse parallele Schwenkachse eine streifenförmige, leicht bogenförmig ausgeführte Schwenklasche schwenkbar angelegt. Diese ist an ihrem anderen Ende bei etwa einem Drittel der Tiefe der Decke des Gehäuses an der Decke um eine dritte Schwenkachse schwenkbar angelenkt. Die Schwenklasche dient der Steuerung der Schwenkbewegung der Frontwand in Abhängigkeit von deren linearer Verschiebung in den seitlichen Linearführungen.

Für Gehäuse der in Rede stehenden Art ist der Raumbedarf oberhalb des Gehäuses von wesentlicher Bedeutung. Gehäuse dieser Art werden häufig in Laborumgebung mit geringem Platzangebot genutzt. Je geringer der Raumbedarf oberhalb des Gehäuses ist, desto besser.

Von Bedeutung ist ferner die gute Zugänglichkeit des Arbeitsraums durch eine möglichst weit geöffnete Frontseite.

Ferner ist für eine möglichst ungestörte Atmosphäre im Arbeitsraum von Bedeutung, dass die Frontwand sich möglichst weitgehend wie ein schneidendes Verschlussmittel bewegt. Wie im den Ausgangspunkt bildenden Stand der Technik beschrieben wird, bezeichnet man ein Verschlussmittel dann als scheidend, wenn es beim Öffnen und Schließen die Luft schneidet und deshalb nur eine geringe Luftbewegung verursacht. Ein schneidendes Verschlussmittel führt dazu, dass beim Verschließen des Arbeitsraums die Luft im Inneren des Arbeitsraums rasch wieder zur Ruhe kommt. Demgegenüber bewegt ein schwenkendes Verschlussmittel große Luftmassen auch innerhalb des Arbeitsraums, was erhebliche Luftbewegungen innerhalb des Arbeitsraums verursacht.

Der Erfindung liegt das Problem zugrunde, das bekannte Gehäuse für ein Laborgerät in Richtung auf einen geringen Raumbedarf oberhalb des Gehäuses und eine möglichst günstige Bewegung der Frontwand auszugestalten und weiterzubilden. Das zuvor aufgezeigte Problem ist bei einem Gehäuse mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Das erfindungsgemäße Gehäuse ist zur Aufnahme eines Laborgerätes oder mehrerer Laborgeräte jedweder Art bestimmt. Hier wird allgemein auf die obige Beschreibungseinleitung verwiesen. Das Gehäuse hat grundsätzlich Boden, Deckel, Rückwand, Seitenwände und Frontwand, die gemeinsam einen Arbeitsraum bilden. Diese konkrete Beschreibung geht von einem im Grundsatz quaderförmigen oder würfelförmigen Gehäuse aus. Es ist aber nicht ausgeschlossen, dass das Gehäuse einen anderen Grundriss hat. Beispielsweise ist es möglich, dass das Gehäuse einen dreieckigen Grundriss hat. Dann würde die Rückwand funktional durch die beiden Seitenwände, die die Katheten des Dreiecks bilden, mit gebildet. Bei einem anderen Grundriss, beispielsweise einem fünfeckigen Grundriss, hätten die Seitenwände mehrere im Winkel zueinander verlaufende Abschnitte. Alle diese Grundrisse fallen auch unter die Formulierung des Anspruchs 1.

Funktional wird die Zugänglichkeit des Gehäuses bei der Erfindung durch die Beweglichkeit der Frontwand geschaffen. Die Frontwand ist zwischen einer abgesenkten Schließposition und einer angehobenen Öffnungsposition aufwärts und abwärts linear und gleichzeitig schwenkend bewegbar. In der Öffnungsposition ist der Arbeitsraum dann an der Frontseite offen und die gewünschten Arbeiten im Arbeitsraum können ausgeführt werden.

Erfindungsgemäß ist nun zunächst vorgesehen, dass die Frontwand nicht durchgehend als plattenförmige, starre Einheit ausgebildet ist, sondern einen unteren plattenförmigen Wandabschnitt und einen mit dem unteren Wandabschnitt um eine erste horizontale Schwenkachse schwenkbar verbundenen oberen plattenförmigen Wandabschnitt aufweist. Wie im Stand der Technik ebenfalls angemerkt worden ist, kann allerdings auch der untere Wandabschnitt für sich wieder aus mehreren miteinander gekoppelten Sektionen bestehen, ähnlich der Konstruktion eines aus dem Stand der Technik für sich bekannten Sektionaltores, wie es beispielsweise für Garageneinfahrten Verwendung findet.

Für die vorliegende Diskussion der Lehre gehen wir der Einfachheit halber, aber ohne Beschränkung davon aus, dass der untere plattenförmige Wandabschnitt eine plattenförmige Einheit bildet.

Erfindungsgemäß ist der untere Wandabschnitt an oder nahe dem unteren Rand mit seitlichen Führungselementen versehen, die miteinander eine zweite, zur ersten Schwenkachse parallele Schwenkachse für den unteren Wandabschnitt definieren. Nahe dem unteren Rand befinden sich die seitlichen Führungselemente vorzugsweise dann, wenn der verbleibende Überstand des unteren Wandabschnitts der Frontwand bezogen auf die horizontale Schwenkachse in Schließposition weniger als 40% der Höhe der Frontwand beträgt.

Rechts und links seitlich der Frontwand sind vertikal aufwärts verlaufende seitliche Führungen angeordnet, in denen zum Bewegen der Frontwand die seitlichen Führungselemente aufwärts und abwärts bewegbar sind. Die erste horizontale Schwenkachse liegt also am unteren Wandabschnitt der Frontwand fest. Der untere Wandabschnitt der Frontwand verschiebt sich nichtlinear gegenüber der Schwenkachse. Die Schwenkachse selbst aber wandert in den seitlichen Führungen rechts und links neben der Frontwand aufwärts und abwärts.

Der obere Wandabschnitt der Frontwand ist mit dem unteren Wandabschnitt schwenkbar verbunden. Der obere Wandabschnitt selbst geht bogenförmig in einen in einem Winkel zum oberen Wandabschnitt verlaufenden plattenförmigen Anschlussabschnitt über. In diesem Zusammenhang bedeutet "bogenförmig" lediglich, dass der Übergang des Wandabschnittes in den Anschlussabschnitt nicht scharfkantig, sondern mit einem praktisch vernünftig zu realisierenden Bogenradius erfolgt. Die beiden Abschnitte sind in diesem Fall einstückig.

Als Alternative ist auch eine winkelsteife Verbindung des oberen Wandabschnittes mit dem Anschlussabschnitt möglich. Hier könnte man auch eine scharfkantige winkelsteife Verbindung realisieren. Hier kann der Anschlussabschnitt auch ein vom oberen Wandabschnitt getrenntes Bauelement sein, das mit dem Wandabschnitt über einen Eckverbinder o. dgl. winkelsteif verbunden ist.

Der Anschlussabschnitt des erfindungsgemäßen Gehäuses ist es dann, der an seinem vom oberen Wandabschnitt entfernten Rand um eine dritte, zur ersten Schwenkachse parallele Schwenkachse mit Abstand von der Frontwand an der Decke schwenkbar angelenkt ist.

Durch die winkelige Ausbildung der Verbindung aus oberem Wandabschnitt und Anschlussabschnitt ist der Bewegungsablauf der Frontwand beim Öffnen und Schließen günstiger, weil weniger Raum oberhalb des Gehäuses benötigt wird. Die winkelförmige Ausgestaltung ist weitgehend verwindungssteif, so dass die Frontwand sicher und verkantungsfrei aufwärts und abwärts geführt wird. Die Lage der ersten horizontalen Schwenkachse am unteren Wandabschnitt definiert fix den Überstand des unteren Wandabschnitts nach vorn. Dadurch lässt sich das Ausschwenken des vorderen Randes der Frontwand genau vorgeben und begrenzen. Die Frontwand verläuft bei der Schließbewegung fast ausschließlich schneidend abwärts.

Nach bevorzugter Lehre ist vorgesehen, dass der Anschlussabschnitt in einem rechten Winkel zum oberen Wandabschnitt angeordnet ist. Damit verläuft dann in Schließposition der Anschlussabschnitt parallel zur Decke und der obere Wandabschnitt parallel bzw. fluchtend zum unteren Wandabschnitt der Frontwand.

Außerdem ist es besonders zweckmäßig, wenn der Anschlussabschnitt im Wesentlichen dieselbe Breite hat wie der obere Wandabschnitt der Frontwand.

Für die Nachvollziehbarkeit der Vorgänge im Arbeitsraum ist es nach bevorzugter Lehre besonders zweckmäßig, dass die Wandabschnitte der Frontwand und vorzugsweise auch der Anschlussabschnitt aus transparentem Material, insbesondere aus Glas oder aus Acryl, bestehen. Im Übrigen können auch die anderen Wände und die Decke des Gehäuses aus transparentem Material dieser Art bestehen, um das Innere des Arbeitsraums von allen Seiten betrachten zu können.

Wie bereits oben erwähnt worden ist, sind besonders bevorzugte Ausgestaltungen und Weiterbildungen des erfindungsgemäßen Gehäuses Gegenstand der Unteransprüche. Für deren weitere Erläuterung wird auch auf die nachfolgenden Erläuterungen der bevorzugten Ausführungsbeispiele verwiesen.

In der Zeichnung zeigt
- Fig. 1:: ein erstes Ausführungsbeispiel eines erfindungsgemäßen Gehäuses mit in Schließposition befindlicher Frontwand;
- Fig. 2:: das Gehäuse aus Fig. 1 mit in Öffnungsposition befindlicher Frontwand;
- Fig. 3:: in einer Fig. 2 entsprechenden Darstellung ein weiteres Ausführungsbeispiel eines erfindungsgemäßen Gehäuses;
- Fig. 4:: in schematischer Darstellung, angelehnt an Fig. 1, eine modifizierte Ausführung des Gehäuses aus Fig. 1;
- Fig. 5:: in schematischer Darstellung, angelehnt an Fig. 1, eine modifizierte Ausführung des Gehäuses aus Fig. 1.

Gegenstand der Erfindung ist ein Gehäuse 1 für ein Laborgerät. Das Gehäuse 1 hat einen Boden 2 hier mit Stützfüßen 3, eine das Gehäuse 1 oben verschließende Decke 4, eine Rückwand 5, Seitenwände 6 und eine Frontwand 7. Gemeinsam umschließen die Teile einen Arbeitsraum 8, der im dargestellten Ausführungsbeispiel allerdings leer ist.

Bereits im allgemeinen Teil der Beschreibung ist darauf hingewiesen worden, dass sich im Arbeitsraum 8 im Grunde beliebige Gerätschaften befinden können. Ein Laborgerät wie insbesondere eine Waage stellt aber ein gutes Beispiel dar.

Das dargestellte Ausführungsbeispiel zeigt das Gehäuse 1 in Quaderform mit einer beispielhaften Breite von etwa 600 mm, einer beispielhaften Tiefe von etwa 500 mm und einer beispielhaften Höhe von ebenfalls etwa 500 mm. Letzteres schließt die Stützfüße 3 ein. Die Höhe der Frontwand 7 selbst beträgt im dargestellten Ausführungsbeispiel beispielhaft etwa 400 mm. Diese Angaben sind nicht beschränkend zu verstehen, sie sollen lediglich ein Gefühl dafür vermitteln, welche Größenordnung ein typisches Gehäuse 1 der in Rede stehenden Art hat.

Bereits im allgemeinen Teil der Beschreibung ist darauf hingewiesen worden, dass das Gehäuse 1 nicht zwingend quaderförmig gestaltet sein muss, es kann auch würfelförmig gestaltet sein oder es kann ganz andere Grundrisse haben. Auf die Ausführungen dazu im allgemeinen Teil der Beschreibung wird hier verwiesen. Das dargestellte und bevorzugte Ausführungsbeispiel zeigt mit dem im Wesentlichen quaderförmigen Gehäuse 1 lediglich ein bevorzugtes, nicht beschränkendes Ausführungsbeispiel.

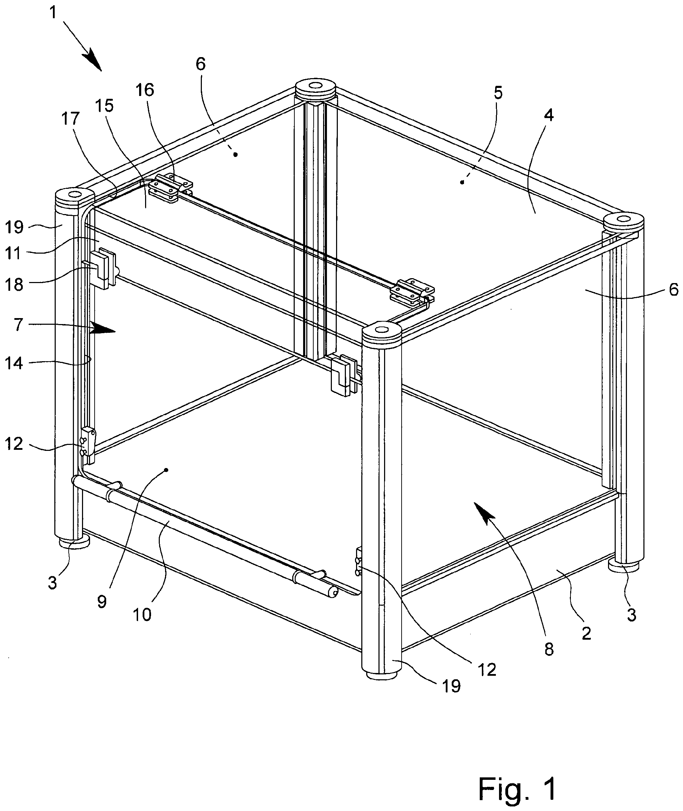

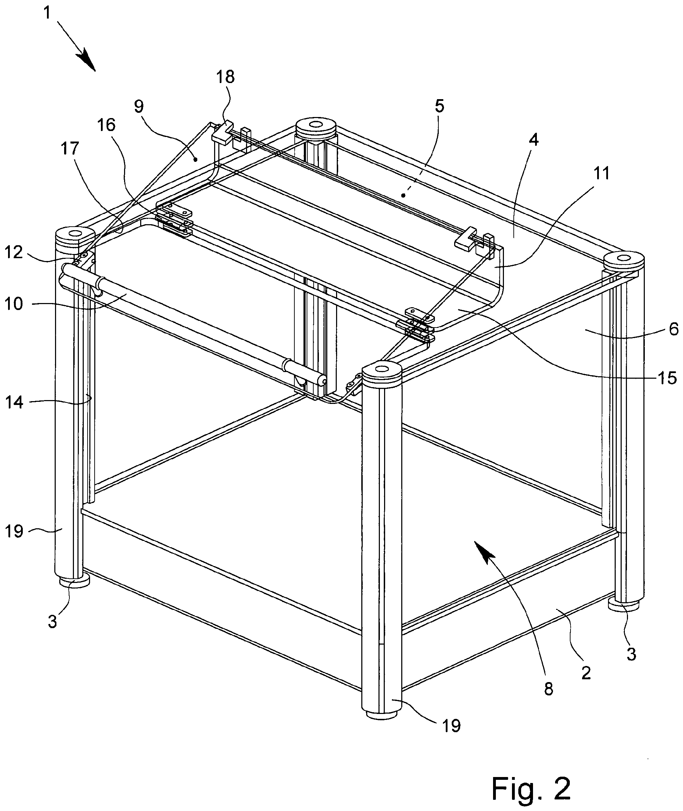

Aus einer Verbindung von Fig. 1, die das geschlossene Gehäuse 1 zeigt, mit Fig. 2, die das geöffnete Gehäuse 1 zeigt, lässt sich erkennen, dass die Frontwand 7 zwischen einer in Fig. 1 dargestellten abgesenkten Schließposition und einer in Fig. 2 dargestellten angehobenen Öffnungsposition aufwärts und abwärts linear und gleichzeitig schwenkend bewegbar ist. Wie Fig. 2 zeigt, ist der Arbeitsraum 8 in der Öffnungsposition der Frontwand 7 an der Frontseite offen. Lediglich im obersten Bereich der Frontseite steht der untere Rand der Frontwand 7, aber fast die gesamte Frontseite ist offen.

Im dargestellten Ausführungsbeispiel sind die Seitenwände 6 des Gehäuses 1 feststehend ausgeführt. Das ist ebenfalls nicht beschränkend zu verstehen. Auch offenbare Seitenwände 6 wie im eingangs erläuterten Stand der Technik können hier eingesetzt werden, wenn die Konstruktion des Gehäuses 1 dies als vorteilhaft ansehen lässt.

Fig. 1 und 2 im Zusammenhang lassen nun gut erkennen, dass die Frontwand 7 einen unteren plattenförmigen Wandabschnitt 9 und einen mit dem unteren Wandabschnitt 9 um eine erste horizontale Schwenkachse schwenkbar verbundenen oberen plattenförmigen Wandabschnitt 11 aufweist, dass der untere Wandabschnitt 9 an oder nahe dem unteren Rand mit seitlichen Führungselementen 12 versehen ist, die miteinander eine zweite, zur ersten Schwenkachse parallele Schwenkachse für den unteren Wandabschnitt 9 definieren, dass rechts und links seitlich der Frontwand 7 vertikal aufwärts verlaufende seitliche Führungen 14 angeordnet sind, dass zum Bewegen der Frontwand 7 die seitlichen Führungselemente 12 in den seitlichen Führungen 14 laufen und darin aufwärts und abwärts bewegbar sind, dass der obere Wandabschnitt 11 bogenförmig in einen in einem Winkel zum oberen Wandabschnitt 11 verlaufenden, plattenförmigen Anschlussabschnitt 15 übergeht oder mit diesem winkelsteif verbunden ist, und dass der Anschlussabschnitt 15 an seinem vom oberen Wandabschnitt 11 entfernten Rand um eine dritte, zur ersten Schwenkachse parallele Schwenkachse mit Abstand von der Frontwand 7 an der Decke 4 schwenkbar angelenkt ist.

Die schwenkbare Anlenkung des Anschlussabschnittes 15 an der Decke 4 erfolgt über dort angeordnete Scharniere 16.

Am unteren Rand des unteren Wandabschnittes 9 befindet sich eine Handgriffschiene 10 zur Betätigung. Alternativ und nicht in den Figuren dargestellt, kann ein motorischer Antrieb zum Öffnen und Schließen der Frontwand 7 vorgesehen sein, wie er beispielsweise im angeführten Stand der Technik in EP 2 217 894 B1 gezeigt ist. Dieser kann den Anschlussabschnitt 15 antreiben. In vorteilhafter Weise verläuft aber der Antriebsstrang ganz oder teilweise in den seitlichen Führungen 14 und ist beidseitig mit den Führungselementen 12 verbunden.

Im dargestellten Ausführungsbeispiel sind der obere Wandabschnitt 11 und der Anschlussabschnitt 15 einstückig miteinander ausgeführt. Sie gehen mit einem angemessenen Bogenradius ineinander über.

Nicht dargestellt ist eine Variante, bei der die beiden Abschnitte scharfkantig aufeinandertreffen und entweder einstückig miteinander ausgeführt oder über einen die winkelsteife Verbindung realisierenden Eckverbinder miteinander verbunden sind.

Aus dem Vergleich von Fig. 1 mit Fig. 2 sieht man auf den ersten Blick die erheblichen Vorteile der erfindungsgemäßen Konstruktion. Die Frontseite des Gehäuses 1 ist in Öffnungsposition der Frontwand 7 weitest möglich geöffnet. Der Zugang zum Arbeitsraum 8 ist sehr gut. Der Überstand des unteren Randes der Frontwand 7 in Öffnungsposition ist gering. Demzufolge ist die Fläche, die beim Schließen der Frontwand 7 eine Schwenkbewegung ausführt, ebenfalls klein. Die winkelsteife Verbindung von oberem Wandabschnitt 11 und Anschlussabschnitt 15 gibt der Frontwand 7 insgesamt eine hohe Stabilität, so dass diese seitlich in den Führungen 14 sicher und verkantungsfrei geführt wird. Die öffnungs- und Schließbewegung verläuft reibungslos.

Aufgrund der winkelförmigen Ausführung von oberem Wandabschnitt 11 und Anschlussabschnitt 15 ist der Platzbedarf oberhalb der Decke 4 des Gehäuses 1 vergleichsweise gering. Der Anschlussabschnitt 15 schwenkt relativ wenig aus, weil er noch einen Teil der Frontwand 7, nämlich den oberen Wandabschnitt 11, mitnimmt.

Die Verwirbelung der Luft beim öffnen und Schließen der Frontwand 7 erfolgt maßgeblich nur oberhalb der Decke 4, so dass die Luft im Arbeitsraum 8 relativ ungestört bleibt.

Beim öffnen der Frontwand 7 ergibt sich eine nach oben hin zunehmend abnehmende Öffnungskraft. In Öffnungsposition ist die Frontwand 7 eigenstabil gehalten.

Nach bevorzugter Lehre, die auch Fig. 1 und Fig. 2 im Vergleich zeigt, ist ferner vorgesehen, dass der Anschlussabschnitt 15 in einem rechten Winkel zum oberen Wandabschnitt 11 angeordnet ist. Das entspricht der hier quaderförmigen Gestaltung des Gehäuses 1 insgesamt, bei dem die Decke 4 rechtwinkelig zur Frontwand 7 verläuft.

Im dargestellten und bevorzugten Ausführungsbeispiel ist ferner vorgesehen, dass der Anschlussabschnitt 15 im Wesentlichen dieselbe Breite wie der obere Wandabschnitt 11 der Frontwand 7 bzw. wie die gesamte Frontwand 7 aufweist. Damit ergibt sich eine hohe Stabilität der Gesamtkonstruktion mit ihren beweglichen Teilen.

Im allgemeinen Teil der Beschreibung ist, ausgehend vom dort diskutierten Stand der Technik, darauf hingewiesen worden, dass der untere Wandabschnitt 9 im Grundsatz auch aus zwei oder mehreren miteinander gekoppelten Sektionen bestehen kann, etwa so wie bei einem Sektionaltor. Das ist im dargestellten Ausführungsbeispiel nicht gezeigt, ist aber eine mögliche Variante der Lehre der Erfindung.

Das in Fig. 1 und 2 dargestellte und insoweit ebenfalls bevorzugte Ausführungsbeispiel zeigt ferner, dass alle Wände des Gehäuses 1 und dessen Decke 4 aus transparentem Material, hier und nach bevorzugter Lehre aus Glas, bestehen. Als Material kommt in anderen Anwendungsfällen aber auch ein transparenter Kunststoff, insbesondere Acryl, in Frage. Für spezielle Anwendung mit empfindlichen oder spezifischen Stoffen ist vorgesehen, das Material für die Wände opak für sichtbares Licht oder für einen bestimmten Bereich des Spektrums, wie beispielsweise UV-Licht undurchlässig oder weitgehend opak zu verwenden.

Demzufolge bestehen im dargestellten Ausführungsbeispiel hinsichtlich der Frontwand 7 die Wandabschnitte 9, 11 ebenso aus Glas wie der Anschlussabschnitt 15. Gerade für den vor dem geschlossenen Gehäuse 1 stehenden Anwender ist von oben so der Blick durch die Abschnitte 11 und 15 ungestört möglich. Auch ist der Blick in den Arbeitsraum 8 in jeder Position, Schließposition und Öffnungsposition, im Wesentlichen frei.

Das in Fig. 1 und 2 dargestellte bevorzugte Ausführungsbeispiel zeigt nun eine weitere Besonderheit dahingehend, dass die Decke 4 im Bereich des Anschlussabschnittes 15 eine von der Frontwand 7 ausgehende, in der Größe dem Anschlussabschnitt 15 angepasste Ausnehmung 17 aufweist und dass bei in Schließposition befindlicher Frontwand 7 der Anschlussabschnitt 15 die Decke 4 schließend in der Ausnehmung 17 liegt. In Fig. 1 sieht man den Anschlussabschnitt 15 die Decke 4 schließend in der Ausnehmung 17 liegend. Die Außenfläche des Gehäuses 1 ist damit im Bereich des Übergangs von der Decke 4 in die Frontwand 7 durchgehend geschlossen. In Fig. 2 sieht man die Öffnungsposition der Frontwand 7. Hier sieht man besonders deutlich die Ausnehmung 17 in der Decke 4, in die beim Schließen der Frontwand 7 der Anschlussabschnitt 15 eintaucht.

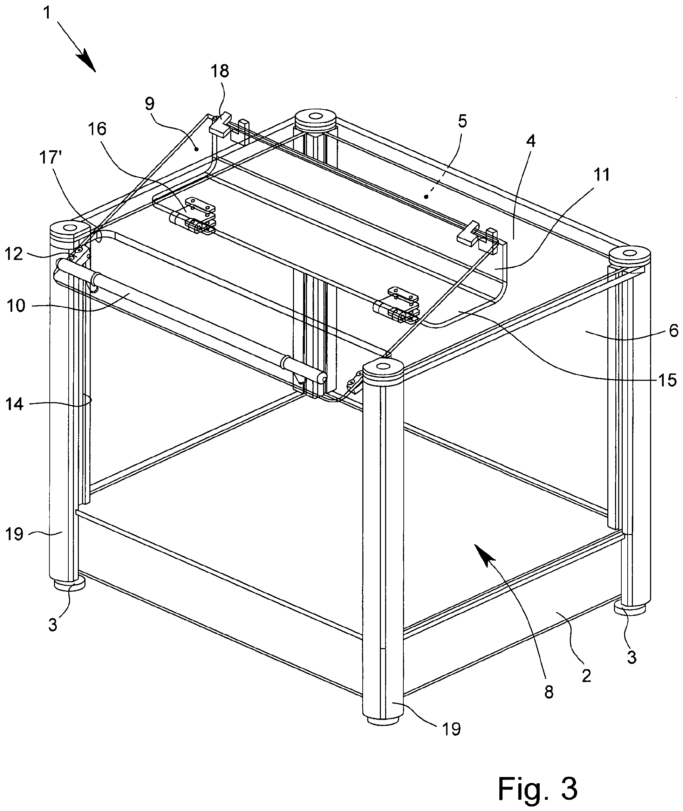

Fig. 3 zeigt eine andere Ausführungsform in einer Fig. 2 entsprechenden Darstellung, also mit der Frontwand 7 in Öffnungsposition. Hier hat die von der Frontwand 7 ausgehende Ausnehmung 17' lediglich eine solche Tiefe, dass der untere plattenförmige Wandabschnitt 9 beim Aufwärts- und Abwärtsbewegen den Rand der Ausnehmung 17' gerade nicht berührt. Die Anlenkung des Anschlussabschnittes 15 an der Decke 4 liegt hier also auf der Decke 4, der Anschlussabschnitt 15 taucht nicht in eine Ausnehmung in der Decke 4 ein, sondern liegt bei in Schließposition befindlicher Frontwand 7 auf der Decke 4. Der Anschlussabschnitt 15 überdeckt dabei die Ausnehmung 17' geringer Tiefe und schließt diese nach oben hin ab. Bei dieser Konstruktion wird beim Schließen der Frontwand 7 das Luftvolumen im Luftraum oberhalb der Decke 4 nicht primär nach unten hin in den Arbeitsraum 8 verlagert, sondern ganz überwiegend seitlich nach rechts und links heraus gedrückt. In gewissen Umständen hat das anwendungstechnische Vorteile. Wie man sieht ist dabei aber die Zweistufigkeit des Gehäuses 1 im Bereich der Decke 4 evtl. ein Nachteil.

Zurück zum in Fig. 1 und 2 im Detail dargestellten Ausführungsbeispiel. Hier ist des Weiteren vorgesehen, dass zur schwenkbaren Verbindung des oberen Wandabschnittes 11 mit dem unteren Wandabschnitt 9 Scharniere 18 vorgesehen sind, deren Schwenkweg bei 180° anschlagbegrenzt ist. Die Anschlagbegrenzung der Scharniere 18 sieht man in Fig. 1 besonders gut. In Schließposition der Frontwand 7 sind dadurch der untere Wandabschnitt 9 und der obere Wandabschnitt 11 exakt fluchtend miteinander ausgerichtet und zu einer plattenförmigen Einheit versteift.

Hinsichtlich der Abmessungen der verschiedenen Komponenten des erfindungsgemäßen Gehäuses 1 empfiehlt es sich, dass der obere Wandabschnitt 11 eine Höhe von 10% bis 40% der Höhe der Frontwand 7 insgesamt aufweist und/oder dass der Anschlussabschnitt 15 eine Tiefe von 10% bis 40% der Tiefe der Decke 4 insgesamt aufweist. Im dargestellten Ausführungsbeispiel hat der obere Wandabschnitt 11 eine Höhe von etwa 15% der Höhe der Frontwand 7 insgesamt und der Anschlussabschnitt 15 eine Tiefe von etwa 25% der Tiefe der Decke 4 insgesamt. Die seitlichen Führungselemente 12 nahe dem unteren Rand des unteren Wandabschnitts 9 der Frontwand 7 liegen in einer Höhe von etwa 10% der Höhe der Frontwand 7 insgesamt. Auch diese Maße sind sämtlich beispielhaft zum Zwecke eines konkreten Verständnisses der Konstruktion des bevorzugten Ausführungsbeispiels.

Grundsätzlich wäre es möglich, jedenfalls einige der Wände des Gehäuses 1 direkt aufeinanderstoßen zu lassen. Im dargestellten und insoweit bevorzugten Ausführungsbeispiel ist allerdings vorgesehen, dass an den der Frontwand 7 zugewandten Rändern der Seitenwände 6 vertikal angeordnete Eckelemente 19 vorgesehen sind. Solche Eckelemente 19 sind auch an den der Rückwand 5 zugewandten Rändern der Seitenwände 6 vorgesehen und verbinden dort steif und fest die Rückwand 5 mit den Seitenwänden 6 und mit der Decke 4.

Die an der Frontwand 7 angeordneten Eckelemente 19 tragen die seitlichen Führungen 14. Vorzugsweise sind diese in den Eckelementen 19 angeordnet. Im dargestellten Ausführungsbeispiel handelt es sich bei den seitlichen Führungen 14 um in den Eckelementen 19 angeordnete, vertikal verlaufende Führungsschienen. In diesen Führungsschienen, die die seitlichen Führungen 14 bilden, laufen die seitlichen Führungselemente 12 an dem unteren Wandabschnitt 9 der Frontwand 7, die beispielsweise als Gleitstücke aus gleitfähigem Kunststoff ausgeführt sind. Diese seitlichen Führungselemente 12 sind mitsamt ihren Befestigungsblöcken an dem Wandabschnitt 9 in den Figuren dargestellt.

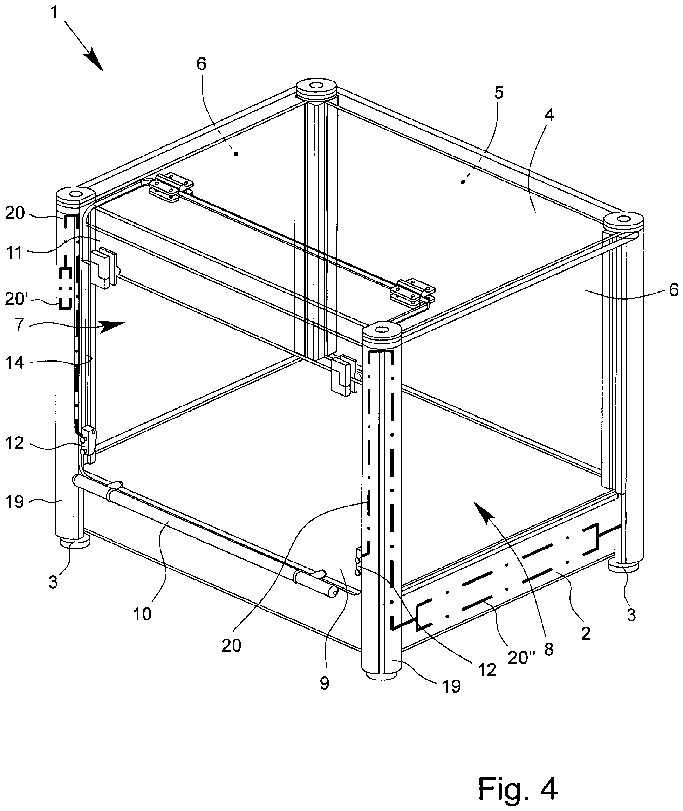

Es gibt nun noch weiter verschiedene Möglichkeiten, das erfindungsgemäße Gehäuse 1 in der einen oder anderen Richtung mit technischen Details auszugestalten und weiterzubilden. Fig. 4 zeigt in schematischer Darstellung angedeutet einige Varianten:
Gemäß Fig. 4 ist es im dortigen bevorzugten Ausführungsbeispiel vorgesehen, dass der jeweiligen seitlichen Führung 14, die hier im jeweiligen Eckelement 19 angeordnet ist, eine Gewichtsausgleichsmechanik 20 zugeordnet ist. In Fig. 4 sieht man links eine Gewichtsausgleichsmechanik 20 angedeutet als Seilzug mit Gegengewicht 20'. Rechts sieht man das Beispiel einer Gewichtsausgleichsmechanik 20 angedeutet als Seilzug mit Zugfeder 20". Im dargestellten Ausführungsbeispiel ist die Zugfeder 20" horizontal im Boden 2 des Gehäuses 1 angeordnet, weil dort der längere Zugweg zur Verfügung steht.

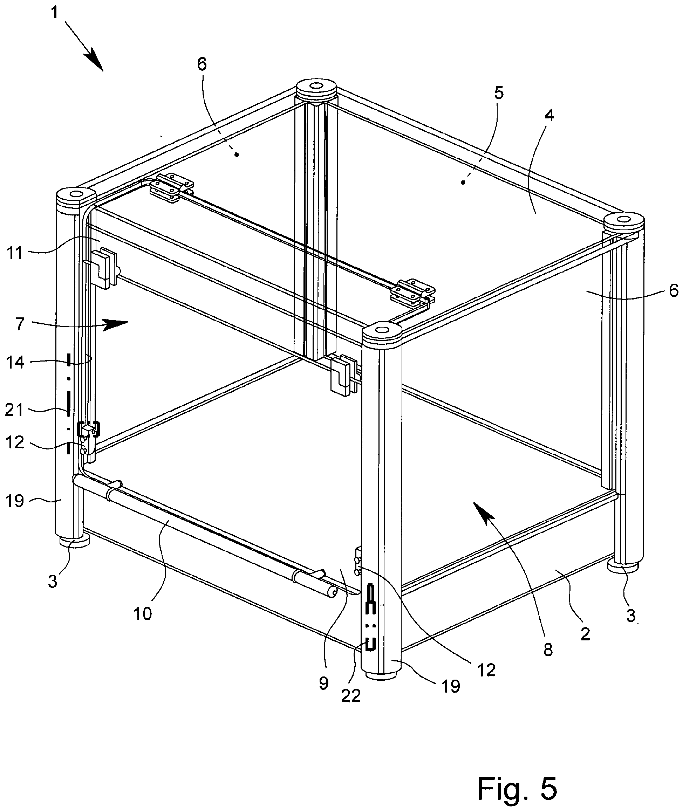

Fig. 5 zeigt weitere Besonderheiten, die man an einem Gehäuse 1 gemäß der Erfindung verwirklichen kann. Links am Eckelement 19 in Fig. 5 ist angedeutet ist eine Absenkbremse 21, während rechts angedeutet ist eine Endlagendämpfung 22. Die links dargestellte Absenkbremse 21, die nach bevorzugter Lehre in der Praxis dann doppelt, also rechts und links, angeordnet würde, bremst bei der Schließbewegung der Frontwand 7 die abwärts gerichtete Bewegung ab, so dass die Frontwand 7 sanft ihre endgültige Schließposition erreicht. Die rechts dargestellte Endlagendämpfung 22 für die Frontwand 7, die in der Praxis, wenn eingesetzt, auch auf beiden Seiten der Frontwand 7 angebracht würde, dient ebenfalls als eine Art Absenkbremse, allerdings erst auf dem letzten Stück der Schließbewegung der Frontwand 7.

Konstruktionen für Absenkbremsen 21 und Endlagendämpfung 22 sind aus dem Stand der Technik umfangreich bekannt. Diese Bauelemente kennt man von der Inneneinrichtung von Möbeln und für eine Fülle anderer Anwendungen. Ein besonders zweckmäßiges Ausführungsbeispiel einer Absenkbremse 21 ist eine Rotationsbremse (ACE "Rotationsbremsen" 6.2011). Bei einer Rotationsbremse dreht sich ein Rotor in einem Silikonbett. Durch Scherung der dünnen Silikonschichten zwischen den Flächen des Rotors und eines diesen umgebenden Stators wird eine Bremsung der Drehbewegung des Rotors verursacht. Das Bremsmoment wird durch die Viskosität des Fluids und die Dimensionierung der Spalte zwischen Rotor und Stator bestimmt.

In Verbindung mit einer in Fig. 5 links angedeuteten Zahnstange und einem Ritzel an der Rotationsbremse lässt sich mit einer Rotationsbremse auch eine lineare Absenkbewegung bremsen. Eine Rotationsbremse hat den Vorteil, dass man die Bremsrichtung wählen kann. Hier wäre es eben die Richtung der Schließbewegung der Frontwand 7.

Im oberen Bereich der Öffnungsbewegung der Frontwand 7 findet der Gewichtsausgleich der Frontwand 7 durch das Nach-Hinten-Schwenken des oberen Wandabschnittes 11 mit dem Anschlussabschnitt 15 statt. Dort ist eine Bremsung nicht mehr erforderlich. Folglich ist es nach bevorzugter Lehre der Erfindung besonders zweckmäßig, dass die Gewichtsausgleichsmechanik 20 und/oder die Absenkbremse 21 so angeordnet und ausgebildet ist, dass sie nur auf einem unteren Abschnitt der Schließbewegung der Frontwand 7 bremsend wirksam ist.

Das System der Absenkbremse kann man auch den Schwenkachsen, insbesondere Scharnieren 16 oder 18 an den Wandabschnitten 9 und 11 bzw. dem Anschlussabschnitt 15 zuordnen. Auch hier empfiehlt es sich dann, dass die Absenkbremse so angeordnet und ausgebildet ist, dass sie nur bei der Schließbewegung der Frontwand 7 bremsend wirksam ist. Dies ist besonders zweckmäßig zu realisieren, wenn man eine Rotationsbremse einsetzt, weil die zu bremsende Bewegung bei den Schwenkachsen bzw. Scharnieren ja ohnehin eine Rotationsbewegung ist.

## Patentansprüche

1. Gehäuse für ein Laborgerät,
mit Boden (2), Decke (4), Rückwand (5), Seitenwänden (6) und Frontwand (7), die gemeinsam einen Arbeitsraum (8) bilden,
wobei die Frontwand (7) zwischen einer abgesenkten Schließposition und einer angehobenen Öffnungsposition aufwärts und abwärts linear und gleichzeitig schwenkend bewegbar ist und in der Öffnungsposition der Frontwand (7) der Arbeitsraum (8) an der Frontseite des Gehäuses (1) offen ist,
**dadurch gekennzeichnet,**
**dass** die Frontwand (7) einen unteren plattenförmigen Wandabschnitt (9) und einen mit dem unteren Wandabschnitt (9) um eine erste horizontale Schwenkachse schwenkbar verbundenen oberen plattenförmigen Wandabschnitt (11) aufweist, dass der untere Wandabschnitt (9) an oder nahe dem unteren Rand mit seitlichen Führungselementen (12) versehen ist, die miteinander eine zweite, zur ersten Schwenkachse parallele Schwenkachse für den unteren Wandabschnitt (9) definieren,
**dass** rechts und links seitlich der Frontwand (7) vertikal aufwärts verlaufende seitliche Führungen (14) angeordnet sind,
**dass** zum Bewegen der Frontwand (7) die seitlichen Führungselemente (12) in den seitlichen Führungen (14) laufen und darin aufwärts und abwärts bewegbar sind, dass der obere Wandabschnitt (11) bogenförmig in einen in einem Winkel zum oberen Wandabschnitt (11) verlaufenden, plattenförmigen Anschlussabschnitt (15) übergeht oder mit diesem winkelsteif verbunden ist, und
**dass** der Anschlussabschnitt (15) an seinem vom oberen Wandabschnitt (11) entfernten Rand um eine dritte, zur ersten Schwenkachse parallele Schwenkachse mit Abstand von der Frontwand (7) an der Decke (4) schwenkbar angelenkt ist.

2. Gehäuse nach Anspruch 1, **dadurch gekennzeichnet,**
**dass** der Anschlussabschnitt (15) in einem rechten Winkel zum oberen Wandabschnitt (11) angeordnet ist und/oder
**dass** der Anschlussabschnitt (15) im Wesentlichen dieselbe Breite hat wie der obere Wandabschnitt (11) der Frontwand (7).

3. Gehäuse nach Anspruch 1 oder 2, **dadurch gekennzeichnet,**
**dass** der untere Wandabschnitt (9) aus zwei oder mehreren miteinander gekoppelten Sektionen besteht.

4. Gehäuse nach einem der vorhergehenden Ansprüche, **dadurch gekennzeichnet,**
**dass** die Wandabschnitte (9, 11) und vorzugsweise auch der Anschlussabschnitt (15), aus transparentem Material, insbesondere aus Glas oder aus Acryl, bestehen, wobei, vorzugsweise, das transparente Material für UV-Licht zumindest weitgehend undurchlässig und/oder für sichtbares Licht opak ausgeführt ist.

5. Gehäuse nach einem der Ansprüche 1 bis 4, **dadurch gekennzeichnet,**
**dass** die Decke (4) im Bereich des Anschlussabschnittes (15) eine von der Frontwand (7) ausgehende, in der Größe dem Anschlussabschnitt (15) angepasste Ausnehmung (17) aufweist und
**dass** bei in Schließposition befindlicher Frontwand (7) der Anschlussabschnitt (15) die Decke (4) schließend in der Ausnehmung (17) liegt.

6. Gehäuse nach einem der Ansprüche 1 bis 4, **dadurch gekennzeichnet,**
**dass** die Decke (4) im Randbereich eine von der Frontwand (7) ausgehende Ausnehmung (17') einer solchen Tiefe aufweist, dass der untere plattenförmige Wandabschnitt (9) beim Aufwärts- und Abwärtsbewegen den Rand der Ausnehmung (17') gerade nicht berührt und
**dass** bei in Schließposition befindlicher Frontwand (7) der Anschlussabschnitt (15) auf der Decke (4) liegt und die Ausnehmung (17') geringer Tiefe überdeckt.

7. Gehäuse nach einem der vorhergehenden Ansprüche, **dadurch gekennzeichnet,**
**dass** zur schwenkbaren Verbindung des oberen Wandabschnittes (11) mit dem unteren Wandabschnitt (9) mindestens ein Scharnier (18) vorgesehen ist, dessen Schwenkweg bei 180° anschlagbegrenzt ist, wobei vorzugsweise zwei Scharniere (18) vorgesehen sind.

8. Gehäuse nach einem der vorhergehenden Ansprüche, **dadurch gekennzeichnet,**
**dass** zur schwenkbaren Verbindung des Anschlussabschnittes (15) mit der Decke (4) mindestens ein Scharnier (16) vorgesehen ist, wobei vorzugsweise zwei Scharniere (16) vorgesehen sind.

9. Gehäuse nach einem der vorhergehenden Ansprüche, **dadurch gekennzeichnet,**
**dass** der obere Wandabschnitt (11) eine Höhe von 10% bis 40% der Höhe der Frontwand (7) insgesamt aufweist.

10. Gehäuse nach einem der vorhergehenden Ansprüche, **dadurch gekennzeichnet,**
**dass** der Anschlussabschnitt (15) eine Tiefe von 10% bis 40% der Tiefe der Decke (4) insgesamt aufweist.

11. Gehäuse nach einem der vorhergehenden Ansprüche, **dadurch gekennzeichnet,**
**dass** an den der Frontwand (7) zugewandten Rändern der Seitenwände (6) vertikal angeordnete Eckelemente (19) vorgesehen sind und dass die seitlichen Führungen (14) an den, vorzugsweise in den Eckelementen (19) angeordnet sind.

12. Gehäuse nach einem der vorhergehenden Ansprüche, **dadurch gekennzeichnet,**
**dass** der jeweiligen seitlichen Führung (14), vorzugsweise in dem Eckelement (19), eine Gewichtsausgleichsmechanik (20), eine Absenkbremse (21) und/oder eine Endlagendämpfung (22) für die Frontwand (7) zugeordnet ist.

13. Gehäuse nach Anspruch 12, **dadurch gekennzeichnet,**
**dass** die Absenkbremse (21) als Rotationsbremse mit Ritzel und Zahnstange ausgeführt ist.

14. Gehäuse nach Anspruch 12 oder 13, **dadurch gekennzeichnet,**
**dass** die Gewichtsausgleichsmechanik (20) und/oder die Absenkbremse (21) so angeordnet und ausgebildet ist, dass sie nur auf einem unteren Abschnitt der Schließbewegung der Frontwand (7) bremsend wirksam ist.

15. Gehäuse nach einem der vorhergehenden Ansprüche, **dadurch gekennzeichnet,**
**dass** mindestens einer Schwenkachse eine Absenkbremse vorzugsweise in Form einer Rotationsbremse zugeordnet ist und, vorzugsweise, dass die Absenkbremse so angeordnet und ausgebildet ist, dass sie nur bei der Schließbewegung der Frontwand (7) bremsend wirksam ist.

## Claims

1. Housing for a laboratory instrument,
comprising a floor (2), ceiling (4), rear wall (5), side walls (6) and front wall (7), which jointly form a working chamber (8),
wherein the front wall (7) is movable upward and downward between a lowered closing position and a raised opening position in a linear and, at the same time, in a pivoting manner and, in the opening position of the front wall (7), the working chamber (8) is open on the front side of the housing (1),
**characterized in that**
the front wall (7) has a bottom plate-like wall portion (9), and a top plate-like wall portion (11) connected to the bottom wall portion (9) pivotably about a first horizontal pivot axis,
the bottom wall portion (9) is provided on or close to the bottom edge with lateral guide elements (12), which mutually define a second pivot axis, parallel to the first pivot axis, for the bottom wall portion (9),
at the right side and at the left side of the front wall (7) vertically upwardrunning lateral guides (14) are arranged,
**in that**, for the movement of the front wall (7), the lateral guide elements (12) run in the lateral guides (14) and are movable upward and downward therein, **in that** the top wall portion (11) merges arcuately into a plate-like connecting portion (15) running at an angle to the top wall portion (11) or is connected thereto in an angularly rigid manner, and
**in that** the connecting portion (15), on its edge remote from the top wall portion (11), is attached to the ceiling (4), at a distance from the front wall (7), pivotably about a third pivot axis parallel to the first pivot axis.

2. Housing according to Claim 1, **characterized in that**
the connecting portion (15) is arranged at a right angle to the top wall portion (11), and/or
**in that** the connecting portion (15) has substantially the same width as the top wall portion (11) of the front wall (7).

3. Housing according to Claim 1 or 2, **characterized in that**
the bottom wall portion (9) consists of two or more mutually coupled sections.

4. Housing according to one of the preceding claims, **characterized in that**
the wall portions (9, 11), and preferably also the connecting portion (15), consist of transparent material, in particular of glass or of acrylic, wherein, preferably, the transparent material is designed to be at least broadly impermeable to UV light and/or opaque to visible light.

5. Housing according to one of Claims 1 to 4, **characterized in that** the ceiling (4) has in the region of the connecting portion (15) a recess (17) which emanates from the front wall (7) and is matched in size to the connecting portion (15), and
**in that**, when the front wall (7) is in the closing position, the connecting portion (15) lies, closing the ceiling (4), in the recess (17).

6. Housing according to one of Claims 1 to 4, **characterized in that** the ceiling (4) has in the edge region a recess (17'), emanating from the front wall (7), of such a depth that the bottom plate-like wall portion (9), in the upward and downward movement, specifically does not touch the edge of the recess (17'), and
**in that** the connecting portion (15), when the front wall (7) is in the closing position, lies on the ceiling (4) and covers the recess (17') of small depth.

7. Housing according to one of the preceding claims, **characterized in that**, for the pivotable connection of the top wall portion (11) to the bottom wall portion (9), at least one hinge (18), the pivot path of which is stop-limited at 180°, is provided, wherein preferably two hinges (18) are provided.

8. Housing according to one of the preceding claims, **characterized in that**, for the pivotable connection of the connecting portion (15) to the ceiling (4), at least one hinge (16) is provided, wherein preferably two hinges (16) are provided.

9. Housing according to one of the preceding claims, **characterized in that** the top wall portion (11) has a height of 10% to 40% of the height of the complete front wall (7).

10. Housing according to one of the preceding claims, **characterized in that** the connecting portion (15) has a depth of 10% to 40% of the depth of the complete ceiling (4).

11. Housing according to one of the preceding claims, **characterized in that** on those edges of the side walls (6) which are facing toward the front wall (7) are provided vertically arranged corner elements (19), and
**in that** the lateral guides (14) are disposed preferably in the corner elements (19).

12. Housing according to one of the preceding claims, **characterized in that** to the respective lateral guide (14), preferably in the corner element (19), is assigned a weight balancing mechanism (20), a lowering brake (21), and/or an end position damping mechanism (22) for the front wall (7).

13. Housing according to Claim 12, **characterized in that** the lowering brake (21) is realized as a rotary brake with pinion and gear rack.

14. Housing according to Claim 12 or 13, **characterized in that** the weight balancing mechanism (20) and/or the lowering brake (21) is arranged and configured such that it has a braking effect only in a bottom section of the closing movement of the front wall (7).

15. Housing according to one of the preceding claims, **characterized in that** to at least one pivot axis is assigned a lowering brake, preferably in the form of a rotary brake, and preferably **in that** the lowering brake is arranged and configured such that it has a braking effect only in the closing movement of the front wall (7).

## Revendications

1. Boîtier pour un appareil de laboratoire, comprenant un fond (2), un couvercle (4), une paroi arrière (5), des parois latérales (6) et une paroi avant (7) qui forment ensemble un espace de travail (8),
la paroi avant (7) pouvant être déplacée entre une position de fermeture abaissée et une position d'ouverture relevée vers le haut et vers le bas linéairement et simultanément avec un mouvement de pivotement et, dans la position d'ouverture, la paroi avant (7) de l'espace de travail (8) étant ouverte au niveau du côté avant du boîtier (1),
**caractérisé en ce que**
la paroi avant (7) présente une portion de paroi inférieure en forme de plaque (9) et une portion de paroi supérieure en forme de plaque (11) connectée à la portion de paroi inférieure (9) de manière à pouvoir pivoter autour d'un premier axe de pivotement,
la portion de paroi inférieure (9) est pourvue, au niveau du bord inférieur ou à proximité de celui-ci, d'éléments de guidage latéraux (12) qui définissent entre eux un deuxième axe de pivotement parallèle au premier axe de pivotement pour la portion de paroi inférieure (9),
des guides latéraux (14) s'étendant verticalement vers le haut sont disposés à gauche et à droite latéralement par rapport à la paroi avant (7),
pour le déplacement de la paroi avant (7), les éléments de guidage latéraux (12) avancent dans les guides latéraux (14) et peuvent être déplacés vers le haut et vers le bas dans ceux-ci,
la portion de paroi supérieure (11) se prolonge par une portion de raccordement (15) en forme de plaque, s'étendant suivant un certain angle par rapport à la portion de paroi supérieure (11) ou est connectée à celle-ci avec un angle fixe, et
la portion de raccordement (15), au niveau de son bord éloigné de la portion de paroi supérieure (11), est articulée au couvercle (4) de manière à pouvoir pivoter autour d'un troisième axe de pivotement parallèle au premier axe de pivotement, à distance de la paroi avant (7).

2. Boîtier selon la revendication 1, **caractérisé en ce que**
la portion de raccordement (15) est disposée à angle droit par rapport à la portion de paroi supérieure (11) et/ou
la portion de raccordement (15) présente essentiellement la même largeur que la portion de paroi supérieure (11) de la paroi avant (7).

3. Boîtier selon la revendication 1 ou 2, **caractérisé en ce que** la portion de paroi inférieure (9) se compose de deux ou plus de deux sections accouplées les unes aux autres.

4. Boîtier selon l'une quelconque des revendications précédentes, **caractérisé en ce que**
les portions de parois (9, 11) et de préférence également la portion de raccordement (15) se composent de matériau transparent, en particulier de verre ou d'acrylique, de préférence le matériau transparent étant au moins essentiellement non perméable à la lumière UV et/ou étant opaque à la lumière visible.

5. Boîtier selon l'une quelconque des revendications 1 à 4, **caractérisé en ce que**
le couvercle (4) présente, dans la région de la portion de raccordement (15), un évidement (17) partant de la paroi avant (7), dont la taille est adaptée à celle de la portion de raccordement (15), et
dans la position de fermeture de la paroi avant (7), la portion de raccordement (15) est située dans l'évidement (17) en fermant le couvercle (4).

6. Boîtier selon l'une quelconque des revendications 1 à 4, **caractérisé en ce que**
le couvercle (4), dans la région de bord, présente un évidement (17') partant de la paroi avant (7) et ayant une profondeur telle que la portion de paroi inférieure en forme de plaque (9) ne vienne pas en contact avec le bord de l'évidement (17') lors de son déplacement vers le haut et vers le bas, et
dans la position de fermeture de la paroi avant (7), la portion de raccordement (15) repose sur le couvercle (4) et recouvre l'évidement (17') de faible profondeur.

7. Boîtier selon l'une quelconque des revendications précédentes, **caractérisé en ce que**
pour la connexion pivotante de la portion de paroi supérieure (11) à la portion de paroi inférieure (9), il est prévu au moins une charnière (18) dont la course de pivotement est limitée par une butée à 180°, de préférence, deux charnières (18) étant prévues.

8. Boîtier selon l'une quelconque des revendications précédentes, **caractérisé en ce que**
pour la connexion pivotante de la portion de raccordement (15) au couvercle (4), il est prévu au moins une charnière (16), de préférence deux charnières (16) étant prévues.

9. Boîtier selon l'une quelconque des revendications précédentes, **caractérisé en ce que**
la portion de paroi supérieure (11) présente au total une hauteur de 10 % à 40 % de la hauteur de la paroi avant (7).

10. Boîtier selon l'une quelconque des revendications précédentes, **caractérisé en ce que**
la portion de raccordement (15) présente au total une profondeur de 10 % à 40 % de la profondeur du couvercle (4).

11. Boîtier selon l'une quelconque des revendications précédentes, **caractérisé en ce qu'**au niveau des bords des parois latérales (6) tournés vers la paroi avant (7) sont prévus des éléments de coin disposés verticalement (19) et **en ce que** les guides latéraux (14) sont disposés au niveau des éléments de coin (19), de préférence dans ceux-ci.

12. Boîtier selon l'une quelconque des revendications précédentes, **caractérisé en ce qu'**au
guide latéral respectif (14), de préférence dans l'élément de coin (19), sont associés un mécanisme d'équilibrage du poids (20), un frein d'abaissement (21) et/ou un amortissement de position de fin de course (22) pour la paroi avant (7).

13. Boîtier selon la revendication 12, **caractérisé en ce que** le frein d'abaissement (21) est réalisé sous forme de frein à rotation avec un pignon et crémaillère.

14. Boîtier selon la revendication 12 ou 13, **caractérisé en ce que** le mécanisme d'équilibrage du poids (20) et/ou le frein d'abaissement (21) sont disposés et réalisés de telle sorte qu'ils ne présentent un effet de freinage que sur une portion inférieure du mouvement de fermeture de la paroi avant (7).

15. Boîtier selon l'une quelconque des revendications précédentes, **caractérisé en ce qu'**au
moins un axe de pivotement est associé à un frein d'abaissement de préférence sous la forme d'un frein à rotation et de préférence **en ce que** le frein d'abaissement est disposé et réalisé de manière à n'avoir un effet de freinage que lors du mouvement de fermeture de la paroi avant (7).
